# FASCICULE DE BREVET EUROPEEN

(11) **EP 2 255 867 B1**
(45) Date de publication et mention de la délivrance du brevet: **26.10.2011**
(21) Numéro de dépôt: 10305551.3
(22) Date de dépôt: 25.05.2010
(51) Int. Cl.: B01F 3/02, B01F 3/04

(54) **Répartiteur d'admission muni d'un dispositif d'injection et de diffusion de fluide gazeux**
Einlassverteiler, der mit einer Einspritz- und Verteilervorrichtung für gasförmige Fluide ausgestattet ist
Intake distributor provided with a device for injecting and diffusing gaseous fluid

(30) Priorité: 27.05.2009 FR 0902627
(43) Date de publication de la demande: 01.12.2010
(73) Titulaire: MARK IV SYSTEMES MOTEURS (SAS), 92300 Levallois Perret (FR)
(72) Inventeur: Naudin, François, 68370 Orbey (FR); Grenier, Anita, 88230 Plainfaing (FR); Winkelmuller, Hugues, 68000 Colmar (FR)
(74) Mandataire: Nuss, Laurent

(56) Documents cités:
- EP-A2- 2 053 233
- WO-A1-94/00226
- DE-A1-102007 035 556
- DE-U1- 8 634 567
- US-A1- 2006 060 173

## Description

La présente invention concerne le domaine du mélange dynamique d'au moins deux fluides gazeux différents en circulation, en vue d'obtenir un flux gazeux unique, plus particulièrement dans le domaine de l'alimentation en comburant des moteurs à combustion interne des véhicules automobiles.

L'invention a plus particulièrement pour objet un répartiteur d'admission pour moteur à combustion interne comportant un segment de conduit d'amenée d'air frais formant un premier fluide gazeux. Ce segment est pourvu d'une ouverture latérale pour l'injection de gaz EGR formant un second fluide gazeux, l'injection du second fluide s'effectuant selon une direction inclinée par rapport à la direction de circulation du premier fluide.

On connaît déjà de nombreuses réalisations de dispositifs permettant de mélanger deux flux de fluides différents, notamment un flux gazeux principal, par exemple de l'air prélevé dans le milieu environnant ou un gaz analogue présentant une première température, avec un flux gazeux secondaire, par exemple des gaz de combustion recyclés ou un gaz analogue présentant une seconde température.

Toutefois, ces solutions connues font état soit d'une efficacité de mélange limitée, en particulier lorsque les flux sont importants, soit d'une constitution complexe, résultant en un coût de fabrication élevé, soit des deux inconvénients précités.

Ainsi, les documents US 5 287 694, WO 94/00226, DE-U-86 34 567, US 2006/060173 et US 4 073 832 divulguent des dispositifs de mélange de deux fluides gazeux ou liquides différents de structure complexe, utilisant en particulier l'effet Venturi, et d'un prix de revient élevé, souvent encombrants et généralement inadaptés pour les véhicules automobiles les plus courants.

De plus, par le document DE 10 2007 035556, on connaît un dispositif d'injection et de mélange de gaz d'échappement dans le flux d'air de combustion d'un moteur à combustion interne.

Ce dispositif connu se présente sous la forme d'un segment de conduit intermédiaire, intégrant d'un seul tenant un conduit secondaire à paroi ajourée s'étendant à l'intérieur dudit segment de conduit, ce dernier étant alimenté en air frais et le conduit secondaire étant alimenté en gaz EGR.

La pièce résultante présente une constitution relativement complexe, n'est pas aisément interchangeable et ne réalise pas un mélange suffisamment efficace et homogène des deux flux, notamment à débit élevé.

En outre, parmi les constructions déjà proposées dans le cadre de l'admission d'air des véhicules à moteurs à combustion interne, on peut notamment citer les dispositifs d'injection et de diffusion comprenant une pièce rapportée avec un corps creux de forme allongée, montée par introduction dans une ouverture latérale du segment de conduit dans lequel circule le premier fluide gazeux.

Ces dispositifs, qui répondent aux demandes précitées en termes de simplicité constructive, ne font toutefois pas état d'une efficacité de mélange suffisante.

La présente invention a notamment pour but, en relation avec l'admission d'air d'un moteur à combustion interne, de proposer un dispositif précité amélioré pour ce dernier aspect en particulier tout en présentant une structure simple et en étant, le cas échéant, aisément interchangeable.

A cet effet, l'invention propose un répartiteur d'admission du type précité, **caractérisé en ce qu'**il comprend une pièce rapportée formant dispositif d'injection et de diffusion, présentant un corps creux de forme allongée, montée dans l'ouverture latérale du segment de conduit et faisant saillie dans le volume intérieur délimité par ledit segment de conduit, en étant exposé au flux du premier fluide, en ce que le corps allongé de ladite pièce rapportée comporte au moins une paroi ou aile de séparation divisant le flux injecté du second fluide gazeux, et le flux du premier fluide, en au moins deux flux secondaires respectifs et en ce que ledit corps creux comprend une enveloppe ajourée autorisant une mise en contact et un mélange entre les premier et second fluides gazeux.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1A est une vue en perspective d'un répartiteur d'admission comprenant un dispositif selon un premier mode de réalisation de l'invention, notamment un premier mode de réalisation de la pièce rapportée ;
la figure 1B est une vue de détail du segment de conduit du répartiteur de la figure 1A comprenant le dispositif d'injection et de diffusion ;
la figure 2 est une vue en élévation latérale dans la direction d'écoulement du premier fluide gazeux du dispositif représenté sur la figure 1;
la figure 3 est une vue en perspective selon une autre direction de l'objet représenté sur les figures 1 et 2, une partie du segment de conduit étant supprimée ;
les figures 4, 5, 6 et 7 sont des vues en perspective selon deux directions différentes (vues A et B) de quatre autres modes de réalisation de la pièce rapportée faisant partie du dispositif selon l'invention ;
les figures 8A, 8B et 8C sont respectivement des vues en perspective (8A et 8B) et en coupe selon A-A (8C) d'un sixième mode de réalisation de la pièce rapportée ;
la figure 9 est une vue en perspective d'un septième mode de réalisation de la pièce rapportée, et,
les figures 10 à 14 sont des représentations schématiques par transparence, sous forme de vues de dessus ou en élévation latérale par rapport au sens de circulation du flux du premier fluide gazeux, de cinq modes de réalisation additionnels de la pièce rapportée.

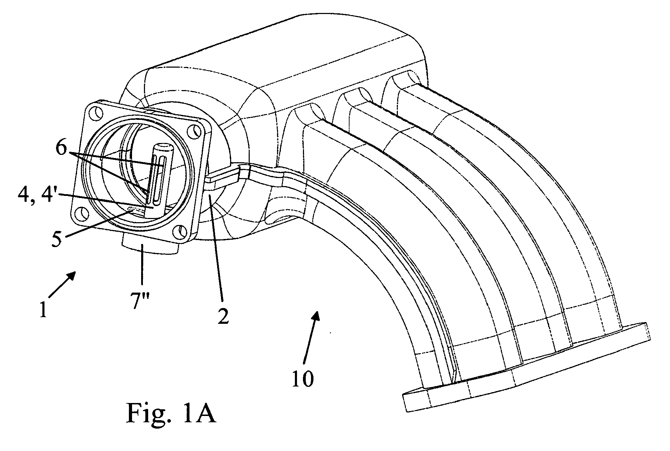

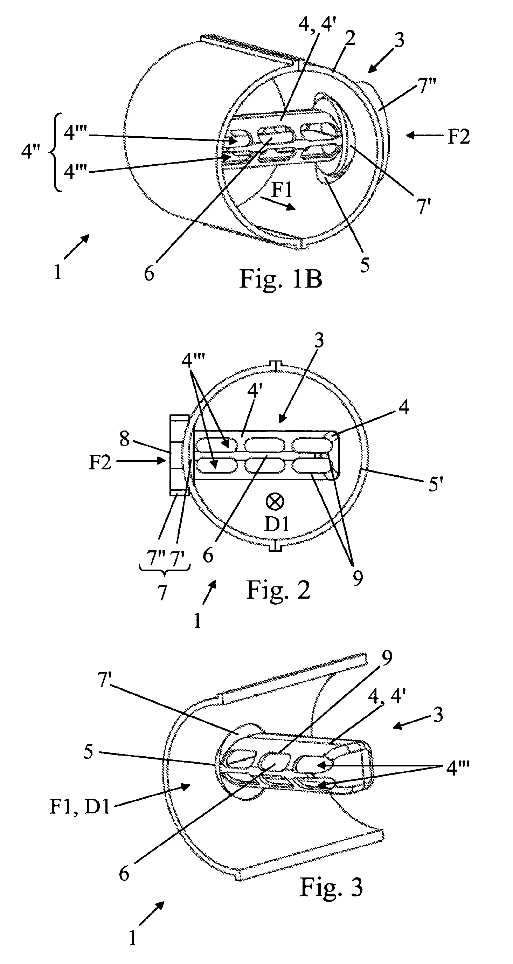

Les figures 1, 2 et 3 des dessins annexés représentent en totalité (figure 1A) ou en partie (figure 1B, 2 et 3), un répartiteur d'admission 10 pour moteur à combustion interne comportant un segment de conduit 2 d'amenée d'air frais formant un premier fluide gazeux, ledit segment 2 étant pourvu d'une ouverture latérale 5 pour l'injection de gaz EGR formant un second fluide gazeux, l'injection du second fluide s'effectuant selon une direction inclinée par rapport à la direction de circulation D1 du premier fluide.

Conformément à l'invention, il est prévu que ledit répartiteur 10 comprenne une pièce 3 rapportée formant dispositif d'injection et de diffusion 1, présentant un corps creux 4 de forme allongée, montée dans l'ouverture latérale 5 du segment de conduit 2 et faisant saillie dans le volume intérieur délimité par ledit segment de conduit 2, en étant exposé au flux du premier fluide, que le corps allongé 4 de ladite pièce 3 rapportée comporte au moins une paroi ou aile de séparation 6, 6' divisant le flux injecté F2 du second fluide gazeux, et le flux F1 du premier fluide, en au moins deux flux secondaires respectifs et que ledit corps creux 4 comprenne une enveloppe ajourée 4' autorisant une mise en contact et un mélange entre les premier et second fluides gazeux.

Ainsi, avant son exposition au flux F1 du premier fluide gazeux, le flux F2 du second fluide gazeux est fractionné par au moins une aile ou paroi 6, favorisant ainsi son mélange avec ledit premier fluide gazeux par une injection multiple et une diffusion répartie dans le flux F1.

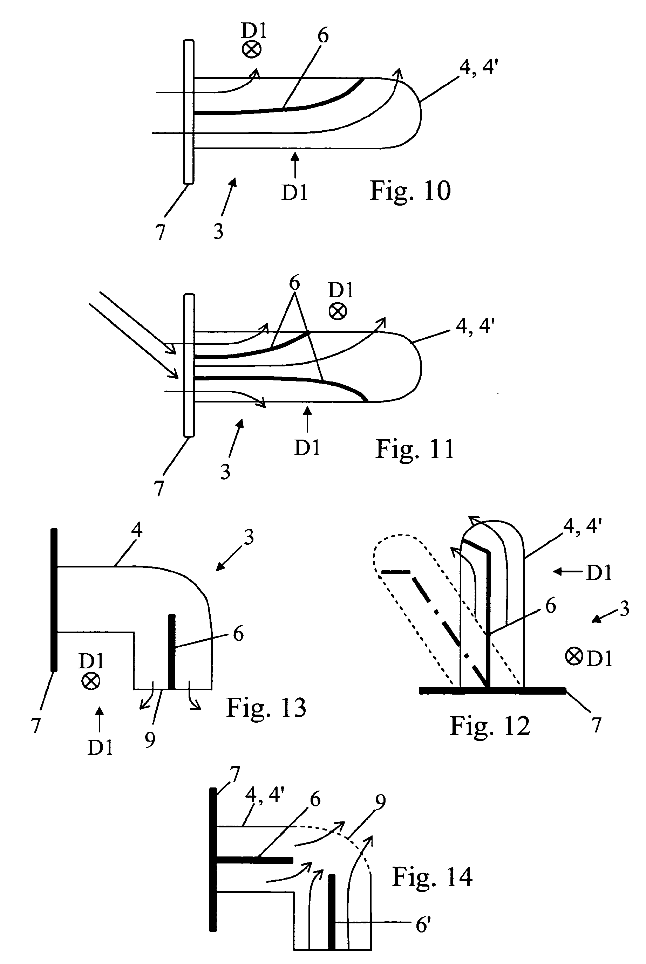

En variante, ou de manière supplémentaire, le flux F1 du premier fluide gazeux est fractionné par au moins une aile ou paroi 6', avant son exposition au flux F2 du second fluide gazeux, favorisant également le mélange des deux fluides gazeux (fig. 14 par exemple).

De manière avantageuse, ladite ou chaque aile ou paroi de séparation 6, 6' est située et configurée de telle manière qu'elle sépare le flux F1 du premier fluide et/ou le flux F2 du second fluide avant leur contact et mélange mutuels, le corps creux 4 présentant une structure rectiligne ou courbe, de même que ladite ou chaque aile ou paroi de séparation 6, 6'.

De nombreuses formes et configurations sont possibles pour le corps creux 4, pour l'enveloppe ajourée 4' et pour les ailes ou parois de séparation 6 et 6', comme l'illustrent les figures des dessins annexés.

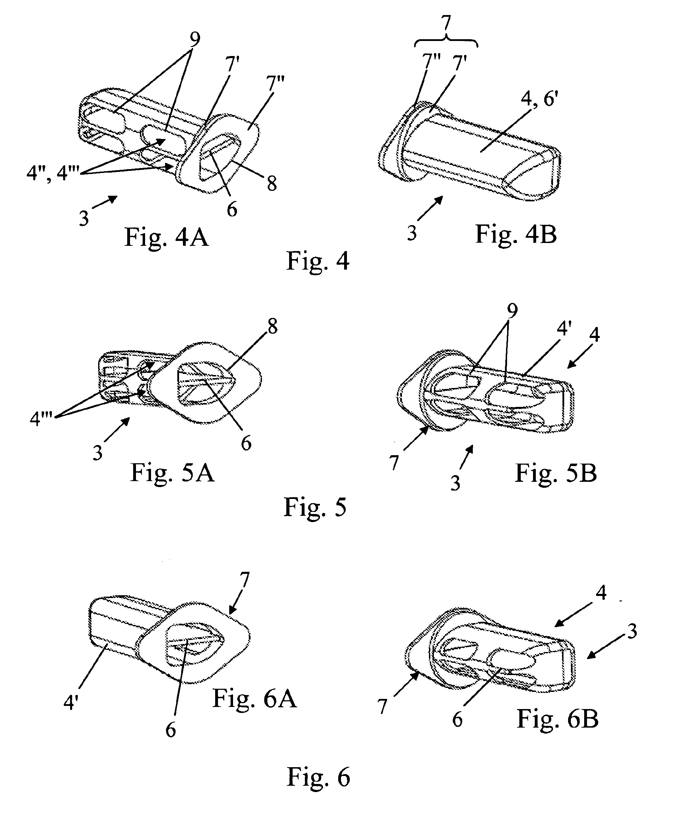

Conformément à un mode de réalisation pratique avantageux de l'invention, ressortant des figures 4 à 14 des dessins, le corps allongé 4 de ladite pièce rapportée 3, comprenant l'enveloppe 4' ajourée et ladite au moins une paroi 6 de séparation de flux, est réalisé d'un seul tenant avec une partie de connexion 7 assurant un montage calé et préférentiellement étanche de la pièce rapportée 3 dans l'ouverture latérale 5 du segment de conduit 2 et fournissant une ouverture d'injection 8 pour le second fluide, éventuellement pourvue d'un site de raccordement d'un conduit ou analogue.

Plus précisément, et comme illustré à titre d'exemple également sur les figures des dessins annexés, la partie de connexion 7 peut consister en une collerette formée sur une extrémité du corps allongé 4 et comprenant une première portion 7' destinée à s'engager de manière ajustée par emboîtement dans l'ouverture latérale 5 du segment de conduit 2 et une seconde portion 7" formant plaque d'appui et de fixation, s'étendant latéralement au-delà de la première portion 7' et destinée à venir en appui extérieur sur la paroi du segment de conduit 2 autour de l'ouverture latérale 5.

La fixation et l'étanchéité au niveau de l'ouverture 5 peuvent être réalisées de différentes manières connues de l'homme du métier.

En vue d'optimiser l'injection, le mélange et l'entraînement du second fluide gazeux dans le flux F1 du premier fluide gazeux et sa répartition dans ce dernier, il est avantageusement prévu que le corps creux allongé 4 de la pièce rapportée 3 s'étende transversalement dans le volume intérieur du segment de conduit 2, préférentiellement au moins jusqu'à la moitié de la largeur dudit segment, et en étant positionné selon une direction inclinée, éventuellement sensiblement orthogonale, par rapport à la direction du flux F1 du premier fluide gazeux.

En fonction du nombre de parois ou d'ailes de séparation 6 ou 6', le flux F1 ou F2 de premier ou second fluide gazeux peut être divisé en deux, trois ou plus de flux secondaires avant injection dans le flux F1 ou F2.

Afin d'obtenir une rampe de séparation, d'injection et de mélange plus étendue, le corps 4 peut même s'étendre jusqu'à proximité immédiate de la région 5' de la paroi du segment de conduit 2 opposée à l'ouverture 5 de montage de la pièce rapportée 3, le cas échéant jusqu'à venir en contact avec cette région 5', par exemple au niveau d'un site de réception coopérant, à configuration adaptée, formé au niveau de cette région (non représenté).

En accord avec une première variante de réalisation, ressortant notamment des figures 1 à 6, 8, 10 et 12 à 14, le corps allongé 4 de la pièce rapportée 3 comporte au moins une paroi de séparation 6 interne s'étendant préférentiellement sur toute la longueur dudit corps 4 et divisant le volume interne 4" délimité par l'enveloppe 4' en au moins deux chambres 4"', dont chacune communique avec l'extérieur par l'intermédiaire d'au moins un ajour 9 de l'enveloppe ajourée 4'.

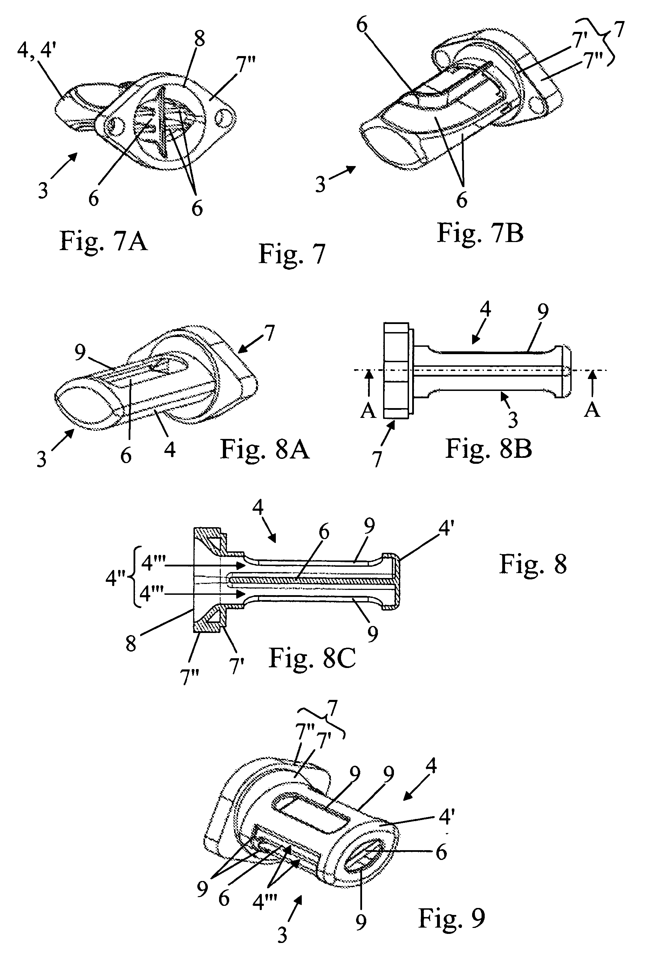

Ainsi, chaque chambre 4"' est mise en communication fluidique avec le volume interne du segment de conduit 2 par au moins un ajour 9 de l'enveloppe 4'. Ces ajours 9 s'étendent, de manière unitaire (figures 8 et 9) ou en alignement de deux, trois ou plus (figures 1 à 6), préférentiellement sur toute la longueur du corps allongé 4 pour répartir transversalement le second fluide gazeux dans le flux F1.

En accord avec une seconde variante de réalisation, ressortant notamment des figures 7 et 11 des dessins annexés, le corps creux allongé 4 de la pièce rapportée 3 comporte au moins deux parois de séparation 6, rectilignes ou incurvées, parallèles entre elles ou non et divisant le flux F2 du second fluide gazeux en au moins deux flux secondaires, injectés directement dans le volume interne du segment de conduit 2 et/ou dans une chambre communiquant avec ledit volume interne.

Comme le montrent à titre d'exemples les figures 1 à 3, 4, 5, 8, 9 et 14, le corps creux allongé 4 de la pièce rapportée 3 peut aussi comporter au moins une paroi, interne ou externe, de séparation 6' pour le flux F1 du premier fluide et au moins une paroi, interne ou externe, de séparation 6 pour le flux F2 du second fluide, ces parois 6 et 6' étant éventuellement au moins partiellement confondues.

La figure 14 illustre, à titre d'exemple, une réalisation de la pièce rapportée 3 dans laquelle ladite au moins une paroi 6' de séparation du flux F1 et ladite au moins une paroi 6 de séparation du flux F2 sont toutes situées à l'intérieur du corps creux allongé 4, ces parois 6 et 6' présentant des dispositions mutuellement inclinées l'une par rapport à l'autre, la ou chaque paroi 6' de séparation du flux F1 du premier fluide étant associée à un ajour 9 de l'enveloppe 4' formant ouverture d'entrée pour ledit premier fluide dans le corps creux allongé 4.

En variante et comme représenté plus particulièrement sur les figures 4 et 8, la ou chaque paroi 6' de séparation pour le flux F1 du premier fluide peut être constituée par une portion de l'enveloppe ajourée 4' du corps creux 4.

En fonction de la nature des fluides gazeux à mélanger, de leurs débits respectifs, des contraintes en terme de pertes de charge et de la qualité souhaitée pour la diffusion et le mélange des fluides, différentes formes peuvent être envisagées pour le corps allongé 4, ainsi que différentes implantations, formes et configurations pour les ajours 9 de l'enveloppe 4' et les ailes ou parois 6 et 6'.

En fonction des perturbations à générer ou à empêcher dans le flux F1 du premier fluide gazeux, ainsi que de la qualité du mélange souhaitée pour les deux fluides, fonction également de la nature respective de ces derniers, la forme du corps creux 4 et la disposition des ajours 9 seront adaptées de manière adéquate.

Ainsi, l'enveloppe ajourée 4' peut définir une forme extérieure profilée à propriétés aérodynamiques pour le corps allongé 4 et être pourvue d'ajours 9 réparties sur toute sa surface, notamment situées côté amont et côté aval dudit corps allongé 4 s'étendant dans le segment de conduit 2, au moins certains de ces ajours 9 étant éventuellement disposés en regard deux par deux (fig. 1 à 3, 5 et 9).

Les chambres de mélange sont ainsi traversées de part en part par le flux F1 et les portions d'enveloppe 4' restantes perturbent très peu ledit flux.

En variante, l'enveloppe 4' peut définir une forme extérieure profilée à propriétés aérodynamiques pour le corps allongé 4 et être pourvue d'ajours 9 débouchant côté amont, et/ou côté aval dudit corps allongé 4 s'étendant dans le segment de conduit 2, ou de manière tangentielle par rapport au flux F1 du premier fluide gazeux (fig. 4, 6 et 8).

La forme extérieure du corps 4 peut présenter en section une forme asymétrique (figures 1 à 6) ou symétrique (figures 8 et 9).

Les chambres 4"' formées dans l'enveloppe 4' par séparation de son volume interne sont ainsi soit ouvertes dans le sens du flux F1 (figure 4), soit ouvertes à contre-flux (figure 6), soit ouvertes tangentiellement (figure 8) ou encore ouvertes dans toutes les directions (figure 9).

De même, en fonction des perturbations et des conditions de mélange des flux recherchés, la ou chaque aile ou paroi de séparation 6, 6' peut être positionnée soit sensiblement perpendiculairement par rapport à la direction du flux (F1) du premier fluide gazeux, soit sensiblement de chant par rapport à la direction du flux (F1) du premier fluide gazeux.

Ces deux possibilités de dispositions des ailes 6, 6' par rapport au flux F1 peuvent être illustrées par les figures 10 à 13, en considérant que la direction D1 de circulation du flux F1 est soit perpendiculaire au plan de ces figures, soit parallèle à la platine de connexion 7 de la pièce rapportée considérée et située dans le plan de ces figures (les différentes possibilités pour la direction D1 sont indiquées sur ces figures).

Selon une autre variante encore de réalisation de l'invention, ressortant par exemple de la figure 7, il peut être prévu que le corps creux 4 de la pièce rapportée 3 comporte au moins une première aile ou paroi de séparation 6 divisant le flux F2 du second fluide gazeux en au moins deux flux secondaires et au moins une seconde aile ou paroi de séparation 6 divisant les flux secondaires issus de la division préalable du flux F2 en des flux tertiaires, ces deux types d'ailes ou de parois 6 s'étendant dans des plans sécants, par exemple perpendiculaires entre eux, au moins certaines desdites ailes ou parois 6 présentant une extrémité courbe formant déflecteur.

Comme le montrent également les figures 7A et 7B, certaines de ces ailes 6 peuvent être situées sur la face extérieure du corps creux 4.

De manière avantageuse, la pièce rapportée 3 est une pièce monobloc moulée en un matériau choisi dans le groupe formé par les polymères thermodurcissables et les polymères thermoplastiques, par exemple à cristaux liquides, ladite pièce 3 étant éventuellement préassemblée avec une partie constitutive du segment de conduit 2, avant formation de ce dernier.

Conformément à l'invention, le segment de conduit 2 forme une portion d'un circuit de circulation d'air correspondant à un conduit d'amenée ou d'entrée d'air d'un répartiteur d'admission, et la pièce rapportée 3 est reliée, par son ouverture d'entrée 8, à un circuit de recirculation de gaz EGR.

Cette pièce 3 réalise simultanément une division du flux du premier fluide gazeux et une division du flux du second fluide gazeux afin d'en favoriser le mélange, tout en limitant les pertes de charge dans le segment de conduit 2 ou en créant une perturbation localisée du flux du premier fluide autour ou en elle en vue de favoriser le mélange gazeux.

On note également que l'enveloppe 4' peut présenter avantageusement une portion de paroi sensiblement pleine ou pourvue d'une ouverture réduite au niveau de l'extrémité du corps allongé 4 opposé à l'ouverture d'injection 8 (figures 1 à 9), ou éventuellement des ailes ou parois 6, 6' réalisant une déflection du flux injecté F2 (flux chaud), de manière à éviter un impact direct de ce flux sur la portion de paroi du segment de conduit 2 opposée à ladite ouverture 8.

L'invention vise aussi une pièce monobloc destinée à l'injection et à la diffusion d'un flux gazeux et destinée à être montée dans un segment de conduit d'amenée d'air frais d'un répartiteur d'admission tel que décrit ci-dessus, **caractérisée en ce qu'**elle présente un corps creux allongé 4 avec une enveloppe ajourée 4' et au moins une paroi interne 6 séparant au moins une partie du volume intérieur dudit corps creux 4.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Répartiteur d'admission pour moteur à combustion interne comportant un segment de conduit d'amenée d'air frais formant un premier fluide gazeux, ledit segment étant pourvu d'une ouverture latérale pour l'injection de gaz EGR formant un second fluide gazeux, l'injection du second fluide s'effectuant selon une direction inclinée par rapport à la direction de circulation du premier fluide,
le répartiteur (10) comprenant une pièce (3) rapportée formant dispositif d'injection et de diffusion (1), présentant un corps creux (4) de forme allongée, montée dans l'ouverture latérale (5) du segment de conduit (2) et faisant saillie dans le volume intérieur délimité par ledit segment de conduit (2), en étant exposé au flux du premier fluide,
et **caractérisé en ce que** le corps allongé (4) de ladite pièce (3) rapportée comporte au moins une paroi ou aile de séparation (6, 6') divisant le flux injecté (F2) du second fluide gazeux, et le flux (F1) du premier fluide, en au moins deux flux secondaires respectifs et
**en ce que** ledit corps creux (4) comprend une enveloppe ajourée (4') autorisant une mise en contact et un mélange entre les premier et second fluides gazeux.

2. Répartiteur d'admission selon la revendication 1, **caractérisé en ce que** ladite ou chaque aile ou paroi de séparation (6, 6') est située et configurée de telle manière qu'elle sépare le flux (F1) du premier fluide et/ou le flux (F2) du second fluide avant leur contact et mélange mutuels, le corps creux (4) présentant une structure rectiligne ou courbe, de même que ladite ou chaque aile ou paroi de séparation (6, 6').

3. Répartiteur d'admission selon la revendication 1 ou 2, **caractérisé en ce que** le corps creux (4) de ladite pièce rapportée (3), comprenant l'enveloppe (4') ajourée et ladite au moins une paroi (6, 6') de séparation de flux, est réalisé d'un seul tenant avec une partie de connexion (7) assurant un montage calé et préférentiellement étanche de la pièce rapportée (3) dans l'ouverture latérale (5) du segment de conduit (2) et fournissant une ouverture d'injection (8) pour le second fluide, éventuellement pourvue d'un site de raccordement d'un conduit ou analogue.

4. Répartiteur d'admission selon la revendication 3, **caractérisé en ce que** la partie de connexion (7) consiste en une collerette formée sur une extrémité du corps allongé (4) et comprenant une première portion (7') destinée à s'engager de manière ajustée par emboîtement dans l'ouverture latérale (5) du segment de conduit (2) et une seconde portion (7") formant plaque d'appui et de fixation, s'étendant latéralement au-delà de la première portion (7') et destinée à venir en appui extérieur sur la paroi du segment de conduit (2) autour de l'ouverture latérale (5).

5. Répartiteur d'admission selon l'une quelconque des revendications 1 à 4, **caractérisé en ce que** le corps creux allongé (4) de la pièce rapportée (3) s'étend transversalement dans le volume intérieur du segment de conduit (2), préférentiellement au moins jusqu'à la moitié de la largeur dudit segment, et en étant positionné selon une direction inclinée, éventuellement sensiblement orthogonale, par rapport à la direction du flux (F1) du premier fluide gazeux.

6. Répartiteur d'admission selon la revendication 5, **caractérisé en ce que** le corps allongé (4) s'étend jusqu'à proximité immédiate de la région (5') de la paroi du segment de conduit (2) opposée à l'ouverture (5) de montage de la pièce rapportée (3), le cas échéant jusqu'à venir en contact avec cette région (5'), par exemple au niveau d'un site de réception coopérant, à configuration adaptée, formé au niveau de cette région.

7. Répartiteur d'admission selon l'une quelconque des revendications 1 à 6, **caractérisé en ce que** le corps allongé (4) de la pièce rapportée (3) comporte au moins une paroi de séparation (6) interne s'étendant préférentiellement sur toute la longueur dudit corps (4) et divisant le volume interne (4") délimité par l'enveloppe (4') en au moins deux chambres (4"'), dont chacune communique avec l'extérieur par l'intermédiaire d'au moins un ajour (9) de l'enveloppe ajourée (4').

8. Répartiteur d'admission selon l'une quelconque des revendications 1 à 6, **caractérisé en ce que** le corps creux allongé (4) de la pièce rapportée (3) comporte au moins deux parois de séparation (6), rectilignes ou incurvées, parallèles entre elles ou non et divisant le flux (F2) du second fluide gazeux en au moins deux flux secondaires, injectés directement dans le volume interne du segment de conduit (2) et/ou dans une chambre (4"') communiquant avec ledit volume interne.

9. Répartiteur d'admission selon l'une quelconque des revendications 1 à 6, **caractérisé en ce que** le corps creux allongé (4) de la pièce rapportée (3) comporte au moins une paroi, interne ou externe, de séparation (6') pour le flux (F1) du premier fluide et au moins une paroi, interne ou externe, de séparation (6) pour le flux (F2) du second fluide, ces parois (6 et 6') étant éventuellement au moins partiellement confondues.

10. Répartiteur d'admission selon la revendication 9, **caractérisé en ce que** ladite au moins une paroi (6') de séparation du flux (F1) et ladite au moins une paroi (6) de séparation du flux (F2) sont toutes situées à l'intérieur du corps creux allongé (4), ces parois (6 et 6') présentant des dispositions mutuellement inclinées l'une par rapport à l'autre, la ou chaque paroi (6') de séparation du flux (F1) du premier fluide étant associée à un ajour (9) de l'enveloppe (4') formant ouverture d'entrée pour ledit premier fluide dans le corps creux allongé (4).

11. Répartiteur d'admission selon la revendication 9, **caractérisé en ce que** la ou chaque paroi (6') de séparation pour le flux (F1) du premier fluide est constituée par une portion de l'enveloppe ajourée (4') du corps creux (4).

12. Répartiteur d'admission selon l'une quelconque des revendications 1 à 11, **caractérisé en ce que** l'enveloppe ajourée (4') définit une forme extérieure profilée à propriétés aérodynamiques pour le corps allongé (4) et est pourvue d'ajours (9) réparties sur toute sa surface, notamment situées côté amont et côté aval dudit corps allongé (4) s'étendant dans le segment de conduit (2), au moins certains de ces ajours (9) étant éventuellement disposés en regard deux par deux.

13. Répartiteur d'admission selon l'une quelconque des revendications 1 à 11, **caractérisé en ce que** l'enveloppe ajourée (4') définit une forme extérieure profilée à propriétés aérodynamiques pour le corps allongé (4) et est pourvue d'ajours (9) débouchant côté amont et/ou côté aval dudit corps allongé (4) s'étendant dans le segment de conduit (2), ou de manière tangentielle par rapport au flux (F1) du premier fluide gazeux.

14. Répartiteur d'admission selon l'une quelconque des revendications 1 à 13, **caractérisé en ce que** la ou chaque aile de séparation (6, 6') est positionnée sensiblement perpendiculairement par rapport à la direction du flux (F1) du premier fluide gazeux.

15. Répartiteur d'admission selon l'une quelconque des revendications 1 à 13, **caractérisé en ce que** la ou chaque aile de séparation (6, 6') est positionnée sensiblement de chant par rapport à la direction du flux (F1) du premier fluide gazeux.

16. Répartiteur d'admission selon l'une quelconque des revendications 1 à 15, **caractérisé en ce que** le corps creux (4) de la pièce rapportée (3) comporte au moins une première aile ou paroi de séparation (6) divisant le flux (F2) du second fluide gazeux en au moins deux flux secondaires et au moins une seconde aile ou paroi de séparation (6) divisant les flux secondaires issus de la division préalable du flux (F2) en des flux tertiaires, ces deux types d'ailes ou de parois (6) s'étendant dans des plans sécants, par exemple perpendiculaires entre eux, au moins certaines desdites ailes ou parois (6) présentant une extrémité courbe formant déflecteur.

17. Répartiteur d'admission selon l'une quelconque des revendications 1 à 16, **caractérisé en ce que** la pièce rapportée (3) est une pièce monobloc moulée en un matériau choisi dans le groupe formé par les polymères thermodurcissables et les polymères thermoplastiques, par exemple à cristaux liquides, ladite pièce (3) étant éventuellement préassemblée avec une partie constitutive du segment de conduit (2), avant formation de ce dernier.

18. Répartiteur d'admission selon l'une quelconque des revendications 1 à 17, **caractérisé en ce que** le segment de conduit (2) dans lequel circule le premier fluide gazeux est une portion d'un circuit de circulation d'air, par exemple un conduit d'amenée ou d'entrée d'air d'un répartiteur d'admission, et **en ce que** la pièce rapportée (3) est reliée à un circuit de recirculation de gaz EGR.

19. Pièce monobloc destinée à l'injection et à la diffusion d'un flux gazeux et destinée à être montée dans un segment de conduit d'amenée d'air frais d'un répartiteur d'admission selon l'une quelconque des revendications 1 à 18, **caractérisée en ce qu'**elle présente un corps creux allongé (4) avec une enveloppe ajourée (4') et au moins une paroi interne (6) séparant au moins une partie du volume intérieur dudit corps creux (4).

## Claims

1. Intake distributor for an internal combustion engine comprising a pipe segment for the conduction of fresh air forming a first gaseous fluid, said segment being provided with a lateral opening for the injection of EGR gas forming a second gaseous fluid, the injection of the second fluid being performed in an inclined direction in relation to the direction of circulation of the first fluid,
the distributor (10) comprising an attached piece (3) forming an injection and diffusion device (1), having a hollow body (4) with an elongated shape, mounted in the lateral opening (5) of the segment of pipe (2) and projecting into the interior volume delimited by said segment of pipe (2), by being exposed to the flux of the first fluid,
and **characterised in that** the elongated body (4) of said attached piece (3) comprises at least one separating wall or vane (6, 6') dividing the injected flow (F2) of the second gaseous fluid and the flux (F1) of the first fluid, into at least two respective secondary fluxes and
**in that** the said hollow body (4) comprises a perforated casing (4') allowing a contact and mixture between the first and second gaseous fluids.

2. Intake distributor according to claim 1, **characterised in that** said or each separating vane or wall (6, 6') is located and configured in such a way that it separates the flow (F1) of the first fluid and/or the flux (F2) of the second fluid prior to their mutual contact and mixing, the hollow body (4) having a rectilinear or curved structure, like said or each separating vane or wall (6, 6').

3. Intake distributor according to claim 1 or 2, **characterised in that** the hollow body (4) of the said attached piece (3') comprising the perforated casing (4') and the said at least one wall (6, 6') for the separation of flow is made as a single component with a connecting part (7) ensuring a locked and preferably sealed assembly of the attached piece (3) in the lateral opening (5) of the segment of pipe (2) and providing an injection opening (8) for the second fluid, possibly provided with a point for the connection of a pipe or the like.

4. Intake distributor according to claim 3, **characterised in that** the connecting part (7) consists of a collar formed on an end of the elongated body (4) and comprises a first portion (7') designed to connect in an adjusted manner by fitting into the lateral opening (5) of the segment of pipe (2) and a second portion (7") forming a support and fixing plate, extending laterally beyond the first portion (7') and designed to bear on the exterior of the wall of the segment of pipe (2) around the lateral opening (5).

5. Intake distributor according to any one of claims 1 to 4, **characterised in that** the elongated hollow body (4) of the attached piece (3) extends transversely into the inner volume of the segment of pipe (2), preferably at least up to half the width of said segment, and being positioned in an inclined direction possibly almost orthogonally in relation to the direction of flow (F1) of the first gaseous fluid.

6. Intake distributor according to claim 5, **characterised in that** the elongated body (4) extends up to the immediate proximity of the region (5') of the wall of the segment of pipe (2) opposite to the mounting opening (5) of the attached piece (3), if need be until coming into contact with said region (5'), for example at the level of a cooperating receiving point with an adjusted configuration, formed at the level of said region.

7. Intake distributor according to any one of claims 1 to 6, **characterised in that** the elongated body (4) of the attached piece (3) comprises at least one internal separating wall (6) extending preferably over the entire width of said body (4) and dividing the internal volume (4") delimited by the casing (4') into at least two chambers (4"'), each of which communicates with the outside by means of at least one perforation (9) of the perforated casing (4').

8. Intake distributor according to any one of claims 1 to 6, **characterised in that** the elongated hollow body (4) of the attached piece (3) comprises at least two rectilinear or curved separating walls (6) which are parallel to one another or not parallel and divide the flow (F2) of the second gaseous fluid into at least two secondary flows, injected directly into the internal volume of the segment of pipe (2) and/or into a chamber (4"') communicating with said internal volume.

9. Intake distributor according to any one of claims 1 to 6, **characterised in that** the elongated hollow body (4) of the attached piece (3) comprises at least one internal or external separating wall (6') for the flow (F1) of the first fluid and at least one internal or external separation wall (6) for the flow (F2) of the second fluid, said walls (6 and 6') being possibly at least partly merged.

10. Intake distributor according to claim 9, **characterised in that** the said at least one separating wall (6') of flow (F1) and said at least one separating wall (6) of flow (F2) are all located on the inside of the elongated hollow body (4), said walls (6 and 6') being mutually inclined in relation to one another, the or each wall (6') for separating the flow (F1) of the first fluid being associated with a perforation (9) of the casing (4') forming the inlet opening for said first fluid in the elongated hollow body (4).

11. Intake distributor according to claim 9, **characterised in that** the or each wall (6') for separating the flow (F1) of the first fluid is formed by a portion of the perforated casing (4') of the hollow body (4).

12. Intake distributor according to any one of claims 1 to 11, **characterised in that** the perforated casing (4') defines an outer profiled form with aerodynamic properties for the elongated body (4) and is provided with perforations (9) distributed over all of its surface in particular upstream and downstream of said elongated body (4) extending into the segment of pipe (2), at least some of said perforations (9) being possible arranged opposite one another two by two.

13. Intake distributor according to any one of claims 1 to 11, **characterised in that** the perforated casing (4') defines an outer profiled form with aerodynamic properties for the elongated body (4) and is provided with perforations (9) opening upstream and/or downstream of said elongated body (4) extending into the segment of pipe (2) or in a tangential manner in relation to the flow (F1) of the first gaseous fluid.

14. Intake distributor according to any one of claims 1 to 13 **characterised in that** the or each separating vane (6, 6') is positioned substantially perpendicularly in relation to the direction of flow (F1) of the first gaseous fluid.

15. Intake distributor according to any one of claims 1 to 13, **characterised in that** the or each separating vane (6, 6') is positioned substantially on edge in relation to the direction of flow (F1) of the first gaseous fluid.

16. Intake distributor according to any one of claims 1 to 15, **characterised in that** the hollow body (4) of the attached piece (3) comprises at least one first separating vane or wall (6) dividing the flow (F2) of the second gaseous fluid into at least two secondary flows and at least one second separating vane or wall (6) dividing the secondary flows coming from the previous division of flow (F2) into tertiary flows, these two types of vanes or walls (6) extending into secant planes, for example perpendicular to one another, at least some of said vanes or walls (6) having a curved end forming a deflector.

17. Intake distributor according to any one of claims 1 to 16, **characterised in that** the attached piece (3) is a moulded monoblock piece made from a material selected from a group comprising thermosetting polymers and thermoplastic polymers, for example liquid crystals, said piece (3) being possibly preassembled with a constituent part of the segment of pipe (2) prior to the formation of the latter.

18. Intake distributor according to any one of claims 1 to 17, **characterised in that** the segment of pipe (2) in which the first gaseous fluid circulates is a portion of a circuit of air circulation, for example a pipe for the conduction or input of air from an intake distributor, and **in that** the attached piece (3) is connected to a circuit for the recirculation of EGR gas.

19. Monoblock piece designed for the injection and diffusion of a gaseous flow and designed to be mounted in a segment of the pipe for the conduction of fresh air from an intake distributor according to any one of claims 1 to 18, **characterised in that** it has an elongated hollow body (4) with a perforated casing (4') and at least one internal wall (6) separating at least one part of the inner volume of said hollow body (4).

## Patentansprüche

1. Einlassverteiler für Verbrennungsmotoren mit mindestens einem Leitungssegment für die Zufuhr von Frischluft, die ein erstes gasförmiges Fluid darstellt, wobei das genannte Segment mit einer seitlichen Öffnung für die Einspritzung von AGR-Gas, das ein zweites gasförmiges Fluid bildet, versehen ist, wobei die Einspritzung des zweiten Fluids in einer Richtung erfolgt, die relativ zur Zirkulationsrichtung des ersten Fluids geneigt ist, wobei der Verteiler (10) einen Einsatz (3) umfasst, der eine Einspritz- und Verteilervorrichtung (1) darstellt und einen länglichen Hohlkörper (4) aufweist, der in der seitlichen Öffnung (5) des Leitungssegmentes (2) montiert ist und in den Innenraum ragt, der vom genannten Leitungssegment (2) umgrenzt wird, und dabei der Strömung des ersten Fluids ausgesetzt ist,
und **dadurch gekennzeichnet, dass** der längliche Körper (4) des genannten Einsatzes (3) mindestens eine Trennwand oder -lamelle (6, 6') aufweist, die die eingeleitete Strömung (F2) des zweiten gasförmigen Fluids und die Strömung (F1) des ersten Fluids in mindestens je zwei sekundäre Strömungen teilt, und **dadurch**, dass der genannte Hohlkörper (4) einen durchbrochenen Mantel (4') aufweist, der eine Kontaktierung und Mischung des ersten und des zweiten gasförmigen Fluids miteinander erlaubt.

2. Einlassverteiler nach Patentanspruch 1, **dadurch gekennzeichnet, dass** die genannte oder jede Trennlamelle oder -wand (6, 6') derart angeordnet und ausgebildet ist, dass sie die Strömung (F1) des ersten Fluids und/oder die Strömung (F2) des zweiten Fluids vor Kontakt und Mischung miteinander trennt, wobei der Hohlkörper (4) einen geradlinigen oder gekrümmten Aufbau aufweist, ebenso wie die oder jede Trennlamelle oder -wand (6, 6').

3. Einlassverteiler nach Patentanspruch 1 oder 2, **dadurch gekennzeichnet, dass** der Hohlkörper (4) des genannten Einsatzes (3), der den durchbrochenen Mantel (4') aufweist und die genannte mindestens eine Trennwand (6, 6') zur Strömungsteilung, einstückig mit einem Verbindungsteil (7) ausgebildet ist, der eine stabile und vorzugsweise dichte Montage des Einsatzes (3) in der seitlichen Öffnung (5) des Leitungssegmentes (2) sicherstellt und eine Einleitöffnung (8) für das zweite Fluid bildet, und eventuell mit einem Anschlusssitz für eine Leitung oder Ähnliches versehen ist.

4. Einlassverteiler nach Patentanspruch 3, **dadurch gekennzeichnet, dass** der Verbindungsteil (7) aus einem Kragen besteht, der an einem Ende des länglichen Körpers (4) ausgebildet ist und einen ersten Teil (7') umfasst, der dazu bestimmt ist, sich durch Einsetzen in die seitliche Öffnung (5) des Leitungssegmentes (2) einzupassen, und einen zweiten Teil (7"), der als Anlage- und Befestigungsplatte dient und sich seitlich jenseits des ersten Teils (7') erstreckt und dazu bestimmt ist, außen an der Wand des Leitungssegmentes (2) um die seitliche Öffnung (5) herum in Anlage zu kommen.

5. Einlassverteiler nach irgendeinem der Patentansprüche 1 bis 4, **dadurch gekennzeichnet, dass** der längliche Hohlkörper (4) des Einsatzes (3) quer in den Innenraum des Leitungssegmentes (2) ragt, vorzugsweise mindestens bis zur Hälfte der Breite des genannten Segmentes und in einer geneigten Richtung, eventuell im Wesentlichen im rechten Winkel, relativ zur Richtung der Strömung (F1) des ersten gasförmigen Fluids angeordnet ist.

6. Einlassverteiler nach Patentanspruch 5, **dadurch gekennzeichnet, dass** sich der längliche Hohlkörper (4) bis in unmittelbare Nähe des Bereichs (5') der Wand des Leitungssegmentes (2) erstreckt, der der Montageöffnung (5) des Einsatzes (3) gegenüber liegt, gegebenenfalls bis zur Berührung mit diesem Bereich (5'), beispielsweise in Höhe eines damit zusammenwirkenden Aufnahmesitzes angepasster Gestaltung, der in Höhe dieses Bereiches ausgebildet ist.

7. Einlassverteiler nach irgendeinem der Patentansprüche 1 bis 6, **dadurch gekennzeichnet, dass** der längliche Hohlkörper (4) des Einsatzes (3) mindestens eine innere Trennwand (6) aufweist, die sich vorzugsweise über die gesamte Länge des genannten Körpers (4) erstreckt und den Innenraum (4"), der durch den Mantel (4') umgrenzt wird, in mindestens zwei Kammern (4"') unterteilt, die jeweils über mindestens eine Durchbrechung (9) des durchbrochenen Mantels (4') mit der Umgebung in Verbindung stehen.

8. Einlassverteiler nach irgendeinem der Patentansprüche 1 bis 6, **dadurch gekennzeichnet, dass** der längliche Hohlkörper (4) des Einsatzes (3) mindestens zwei geradlinige oder gekrümmte, zueinander parallele oder nicht parallele Trennwände (6) aufweist, die die Strömung (F2) des zweiten gasförmigen Fluids in mindestens zwei sekundäre Strömungen teilt, die direkt in den Innenraum des Leitungssegmentes (2) und/oder in eine Kammer (4"') eingeleitet werden, die mit dem genannten Innenraum in Verbindung steht.

9. Einlassverteiler nach irgendeinem der Patentansprüche 1 bis 6, **dadurch gekennzeichnet, dass** der längliche Hohlkörper (4) des Einsatzes (3) mindestens eine innere oder äußere Trennwand (6') für die Strömung (F1) des ersten Fluids aufweist und mindestens eine innere oder äußere Trennwand (6) für die Strömung (F2) des zweiten Fluids, wobei diese Trennwände (6 und 6') eventuell mindestens teilweise zusammenfallen.

10. Einlassverteiler nach Patentanspruch 9, **dadurch gekennzeichnet, dass** die genannte mindestens eine Trennwand (6') zur Teilung der Strömung (F1) und die genannte mindestens eine Trennwand (6) zur Teilung der Strömung (F2) innerhalb des länglichen Hohlkörpers (4) angeordnet sind, wobei diese Trennwände (6 und 6') relativ zueinander geneigt angeordnet sind, wobei die oder jede Trennwand (6') der Strömung (F1) des ersten Fluids einer Durchbrechung (9) des Mantels (4') zugeordnet ist, die eine Einlassöffnung des genannten ersten Fluids in den länglichen Hohlkörper (4) darstellt.

11. Einlassverteiler nach Patentanspruch 9, **dadurch gekennzeichnet, dass** die oder jede Trennwand (6') der Strömung (F1) des ersten Fluids von einem Teil des durchbrochenen Mantels (4') des länglichen Körpers (4) gebildet wird.

12. Einlassverteiler nach irgendeinem der Patentansprüche 1 bis 11, **dadurch gekennzeichnet, dass** der durchbrochene Mantel (4') dem länglichen Körper (4) eine Profilaußenform mit aerodynamischen Eigenschaften verleiht und mit Durchbrechungen (9) versehen ist, die über seine gesamte Oberfläche verteilt sind und insbesondere an der Anströmseite und der Abströmseite des länglichen Körpers (4) angeordnet sind, der in das Leitungssegment (2) ragt, wobei mindestens bestimmte dieser Durchbrechungen (9) eventuell einander paarweise gegenüberliegend angeordnet sind.

13. Einlassverteiler nach irgendeinem der Patentansprüche 1 bis 11, **dadurch gekennzeichnet, dass** der durchbrochene Mantel (4') dem länglichen Körper (4) eine Profilaußenform mit aerodynamischen Eigenschaften verleiht und mit Durchbrechungen (9) versehen ist, die an der Anströmseite und/oder der Abströmseite des länglichen Körpers (4) münden, der in das Leitungssegment (2) ragt, oder tangential zur Strömung (F1) des ersten gasförmigen Fluids.

14. Einlassverteiler nach irgendeinem der Patentansprüche 1 bis 13, **dadurch gekennzeichnet, dass** die oder jede Trennlamelle (6, 6') im Wesentlichen im rechten Winkel zur Strömungsrichtung (F1) des ersten gasförmigen Fluids angeordnet ist.

15. Einlassverteiler nach irgendeinem der Patentansprüche 1 bis 13, **dadurch gekennzeichnet, dass** die oder jede Trennlamelle (6, 6') im Wesentlichen hochkant zur Strömungsrichtung (F1) des ersten gasförmigen Fluids angeordnet ist.

16. Einlassverteiler nach irgendeinem der Patentansprüche 1 bis 15, **dadurch gekennzeichnet, dass** der Hohlkörper (4) des Einsatzes (3) mindestens eine erste Trennwand oder -lamelle (6) aufweist, die die Strömung (F2) des zweiten gasförmigen Fluids in mindestens zwei sekundäre Strömungen teilt, und mindestens eine zweite Trennwand oder -lamelle (6), die die sekundären Strömungen, die aus der vorangehenden Teilung der Strömung (F2) hervorgegangen sind, in tertiäre Strömungen teilt, wobei diese beiden Trennwand- oder -lamellenarten (6) in einander schneidenden Ebenen liegen, die beispielsweise senkrecht aufeinander stehen, wobei mindestens bestimmte unter den genannten Trennwänden oder -lamellen (6) ein gebogenes Ende aufweisen, das einen Abweiser darstellt.

17. Einlassverteiler nach irgendeinem der Patentansprüche 1 bis 16, **dadurch gekennzeichnet, dass** der Einsatz (3) einstückig aus einem Werkstoff gegossen wurde, der aus der Gruppe gewählt wurde, die aus den duroplastischen Polymeren und den thermoplastischen Polymeren, beispielsweise mit Flüssigkristallen, besteht, wobei das genannte Stück (3) eventuell an einem Bestandteil des Leitungssegmentes (2), vor Ausformung dieses Letztgenannten, vormontiert ist.

18. Einlassverteiler nach irgendeinem der Patentansprüche 1 bis 17, **dadurch gekennzeichnet, dass** das Leitungssegment (2), durch das das erste gasförmige Fluid strömt, Teil eines Luftzirkulationskreislaufes ist, beispielsweise eine Lufteinleitungs- oder -einlassleitung eines Einlassverteilers, und **dadurch**, dass der Einsatz (3) mit einem Rückführungskreislauf für AGR-Gas verbunden ist.

19. Blockgussstück zur Einleitung und Verteilung einer Gasstromes, dafür bestimmt, in einem Segment einer Frischluftzufuhrleitung eines Einlassverteilers nach irgendeinem der Patentansprüche 1 bis 18 montiert zu werden, **dadurch gekennzeichnet, dass** es einen länglichen Hohlkörper (4) mit einem durchbrochenen Mantel (4') aufweist und mindestens eine Innenwand (6), die mindestens einen Teil des Innenraumes des genannten Hohlkörpers (4) teilt.
